# EUROPEAN PATENT APPLICATION

(11) **EP 3 917 127 A1**
(43) Date of publication of application: **01.12.2021**
(21) Application number: 20745901.7
(22) Date of filing: 21.01.2020
(51) Int. Cl.: H04N 5/225, B60R 1/00, G03B 15/00, G03B 17/02, H04N 5/345

(54) **VEHICLE-MOUNTED CAMERA**

(30) Priority: 23.01.2019 JP 2019009206
(71) Applicant: Sony Semiconductor Solutions Corporation, Atsugi-shi, Kanagawa 243-0014 (JP)
(72) Inventor: YAMAGUCHI, Takuya, Atsugi-shi, Kanagawa 243-0014 (JP)
(74) Representative: Witte, Weller & Partner Patentanwälte mbB
(86) International application number: PCT/JP2020/001821
(87) International publication number: WO 2020/153317

(57) **Abstract**

[Object] To provide a vehicle-mounted camera capable of satisfactorily capturing images from far side to near side.

[Solving Means] A vehicle-mounted camera includes a lens unit and an imaging device. The imaging device has a rectangular imaging surface that extends along an in-plane direction orthogonal to an optical axis of the lens unit and includes a first position and a second position different from each other, the optical axis passing through the first position, the second position being at the center in the in-plane direction. In this vehicle-mounted camera, the imaging field of view including the near side can be expanded without impairing the resolution in the imaging field of view including the far side. As a result, it is possible to provide a vehicle-mounted camera capable of satisfactorily capturing images from far side to near side in a lump.

## Description

### Technical Field

The present technology relates to a vehicle-mounted camera capable of capturing an image of an external environment of a movable body.

### Background Art

A rear view camera for capturing an image of an external environment behind an automobile is known. Patent Literature 1 discloses a rear view camera for capturing an image of a far distance behind the automobile and generating an image usable as a substitute for a rearview mirror. Further, Patent Literature 2 discloses a rear view camera for capturing an image of the vicinity of the rear side of an automobile and generating an image for parking assistance.

### Citation List

### Patent Literature

Patent Literature 1: Japanese Patent Application Laid-open No. 2018-171982
Patent Literature 2: Japanese Patent Application Laid-open No. 2018-099935

### Disclosure of Invention

### Technical Problem

In rear view cameras, the direction of the optical axis suitable for imaging the far side and the direction of the optical axis suitable for imaging the near side are greatly different from each other. On the other hand, if two rear view cameras are installed at the rear portion of an automobile, the aesthetic sense is greatly impaired. For this reason, there is a demand for a rear view camera capable of satisfactorily capturing images from far side to near side of the automobile in a lump.

In view of the above circumstances, it is an object of the present technology to provide a vehicle-mounted camera capable of satisfactorily capturing images from far side to near side of the automobile in a lump.

### Solution to Problem

In order to achieve the above object, a vehicle-mounted camera according to an embodiment of the present technology includes a lens unit and an imaging device.

The imaging device has a rectangular imaging surface that extends along an in-plane direction orthogonal to an optical axis of the lens unit and includes a first position and a second position different from each other, the optical axis passing through the first position, the second position being at the center in the in-plane direction.

In this vehicle-mounted camera, the imaging field of view including the near side can be expanded without impairing the resolution in the imaging field of view including the far side. As a result, it is possible to provide a vehicle-mounted camera capable of satisfactorily capturing images from far side to near side in a lump.

The vehicle-mounted camera may be installed at a rear portion of a movable body and is turned rearward.

In this case, the vehicle-mounted camera may be installed such that the first position is vertically lower than the second position.

Further, the vehicle-mounted camera may be installed such that the optical axis is inclined vertically downward toward a rear side.

Furthermore, the imaging surface may include a first imaging region for generating a mirror image for substituting for a rearview mirror, and a second imaging region for generating a near-side image for parking assistance, and the first position may be in the first imaging region.

In this configuration, it is possible to provide a rear view camera capable of collectively generating a high-resolution image of an imaging field of view including a far side and an image of a wider imaging field of view including a near side of a moving object.

The vehicle-mounted camera may be installed at a lateral portion of a movable body and is turned rearward.

In this case, the vehicle-mounted camera may be installed such that the first position is outside of the second position.

Further, the vehicle-mounted camera may be installed such that the optical axis is inclined outward toward a rear side.

Furthermore, the vehicle-mounted camera may be installed such that an image for substituting for a side mirror can be generated.

In this configuration, it is possible to provide a side view camera capable of obtaining high resolution on the rear side and generating an image of a wide imaging field of view from the rear side to the lateral side.

### Brief Description of Drawings

[Fig. 1] Fig. 1 is a cross-sectional view of a vehicle-mounted camera according to an embodiment of the present technology.
[Fig. 2] Fig. 2 is a cross-sectional view of a general vehicle-mounted camera.
[Fig. 3] Fig. 3 is a block diagram showing a system configuration example of the vehicle-mounted camera according to the above embodiment.
[Fig. 4] Fig. 4 is a diagram showing an imaging request field of view of a rear view camera.
[Fig. 5] Fig. 5 is a cross-sectional view of the general vehicle-mounted camera.
[Fig. 6] Fig. 6 is a cross-sectional view of the general vehicle-mounted camera.
[Fig. 7] Fig. 7 is a plan view of an imaging surface of an imaging device of the general vehicle-mounted camera.
[Fig. 8] Fig. 8 is a cross-sectional view of the general vehicle-mounted camera.
[Fig. 9] Fig. 9 is a plan view of an imaging surface of an imaging device of the general vehicle-mounted camera.
[Fig. 10] Fig. 10 is a cross-sectional view of the vehicle-mounted camera according to the above embodiment.
[Fig. 11] Fig. 11 is a plan view of an imaging surface of the vehicle-mounted camera according to the above embodiment.
[Fig. 12] Fig. 12 is a block diagram showing a system configuration example to serve as a rear view camera of the vehicle-mounted camera according to the above embodiment.
[Fig. 13] Fig. 13 is a diagram showing an imaging request field of view of a side view camera.
[Fig. 14] Fig. 14 is a cross-sectional view of the general vehicle-mounted camera.
[Fig. 15] Fig. 15 is a diagram showing an imaging field of view and a direction of an optical axis to serve as a side view camera of a general vehicle-mounted camera.
[Fig. 16] Fig. 16 is a cross-sectional view of the vehicle-mounted camera according to the above embodiment.
[Fig. 17] Fig. 17 is a diagram showing an imaging field of view and a direction of an optical axis to serve as a side view camera of the vehicle-mounted camera according to the above embodiment.

### Mode(s) for Carrying Out the Invention

### [Vehicle-Mounted Camera 10]

### (Overall Configuration)

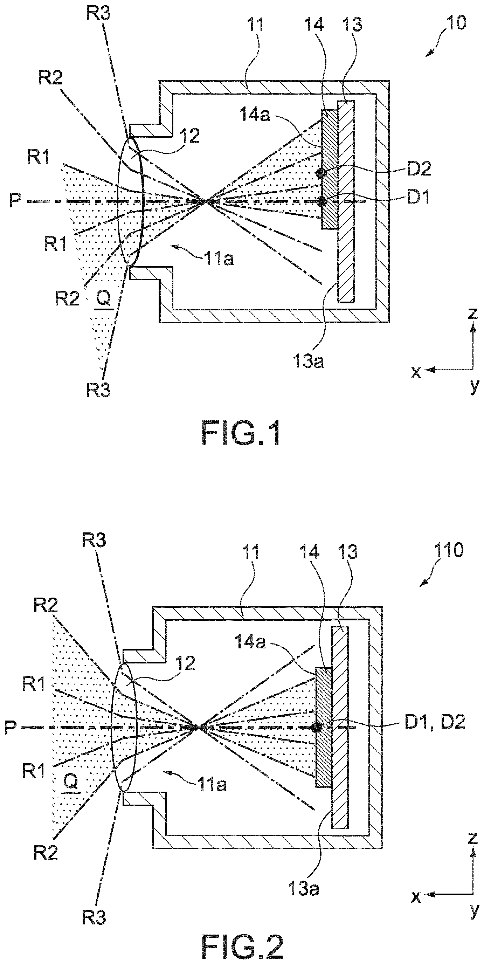

Fig. 1 is a cross-sectional view of a vehicle-mounted camera 10 according to an embodiment of the present technology. Fig. 2 is a cross-sectional view of a general vehicle-mounted camera 110. In Figs. 1 and 2, mutually orthogonal x-, y-, and z-axes are shown. The x-axis, y-axis, and z-axis define a fixed coordinate system that is fixed with respect to the vehicle-mounted camera 10, 110.

First, the common configuration of the vehicle-mounted camera 10 according to this embodiment and the general vehicle-mounted camera 110 will be described. The vehicle-mounted camera 10, 110 includes a housing 11, a lens unit 12, a substrate 13, and an imaging device 14. The housing 11 is configured as an accommodation unit that accommodates the components of the vehicle-mounted camera 10, 110 in the internal space thereof.

The housing 11 includes an opening 11a that opens the internal space thereof in the x-axis positive direction. The lens unit 12 has an optical axis P parallel to the x-axis and is attached to the opening 11a of the housing 11. The configuration of the lens unit 12 can be appropriately determined. For example, the lens unit 12 may include a plurality of lenses having the optical axis P in common.

The substrate 13 has a flat plate shape extending along the y-z plane and is disposed on the x-axis negative direction side in the internal space of the housing 11 with respect to the lens position. The substrate 13 has a mounting surface 13a facing in the x-axis positive direction. Electronic components including the imaging device 14 are mounted on the mounting surface 13a of the substrate 13. Note that it is possible to mount the electronic components on the mounting surface facing in the x-axis negative direction of the substrate 13.

The imaging device 14 has a flat plate shape extending along the y-z plane. The imaging device 14 has an imaging surface 14a facing in the x-axis positive direction. The imaging surface 14a has a rectangular outline including two sides parallel to the y-axis and two sides parallel to the z-axis. In the imaging device 14, photoelectric conversion elements constituting pixels are arranged over the entire region of the imaging surface 14a.

Thus, the imaging device 14 is capable of generating an image from the light incident on the imaging surface 14a. The imaging device 14 used in the vehicle-mounted camera 10, 110 is not limited to a specific type. As the imaging device 14, for example, a charge coupled device (CCD) or a complementary metal oxide semiconductor (CMOS) can be used.

The vehicle-mounted camera 10, 110 is configured such that part of the light incident on the lens unit 12 from the external environment enters the imaging surface 14a of the imaging device 14. Therefore, in the vehicle-mounted camera 10, 110, the range of light incident on the imaging surface 14a out of the light incident on the lens unit 12 is an imaging field of view Q that is an imaging capable region.

In Figs. 1 and 2, the imaging field of view Q of the vehicle-mounted camera 10, 110 is shown by a dot pattern. The vehicle-mounted camera 10 according to this embodiment and the general vehicle-mounted camera 110 are different from each other in the imaging field of view Q. Hereinafter, the imaging field of view Q of the vehicle-mounted camera 10 according to this embodiment will be described while comparing the imaging field of view Q of the general vehicle-mounted camera 110.

### (Imaging Field of View Q)

In Figs. 1 and 2, the light incident on the lens unit 12 of the vehicle-mounted camera 10, 110 from the external environment is schematically shown as light rays R1, R2, and R3 by one-dot chain lines. The light rays R1, R2, and R3 are incident on the lens unit 12 from a direction inclined outward in the z-axis direction with respect to the optical axis P, and the outward inclination in the z-axis direction with respect to the optical axis P is increased in this order.

Further, in Figs. 1 and 2, a first position D1 and a second position D2 on the imaging surface 14a of the imaging device 14 of the vehicle-mounted camera 10, 110 are shown. The first position D1 is defined as a position through which the optical axis P passes on the imaging surface 14a. The second position D2 is at the center of the imaging surface 14a in the in-plane direction, that is, defined as the point of intersection of the diagonals in the rectangular imaging surface 14a.

In the general vehicle-mounted camera 110 shown in Fig. 2, the imaging device 14 is disposed in the central portion of the mounting surface 13a of the substrate 13. As a result, in the vehicle-mounted camera 110, the first position D1 and the second position D2 on the imaging surface 14a coincide with each other. Thus, in the vehicle-mounted camera 110, the imaging field of view Q is symmetrical with respect to the optical axis P.

Specifically, in the vehicle-mounted camera 110, the light rays R1 and R2 having a relatively small range of inclination with respect to the optical axis P enter the imaging surface 14a from both the z-axis positive direction side and the z-axis negative direction side. On the other hand, in the vehicle-mounted camera 110, the light ray R3 having the largest inclination with respect to the optical axis P does not enter the imaging surface 14a.

In other words, the vehicle-mounted camera 110 fails to capture an image in a direction largely inclined with respect to the optical axis P. In the configuration of the vehicle-mounted camera 110, in order to expand the imaging field of view Q outward, it is necessary to enlarge the imaging surface 14a of the imaging device 14. However, since the enlargement of the imaging surface 14a is accompanied by an increase in size of the imaging device 14, the manufacturing cost of the vehicle-mounted camera 110 is increased.

In contrast, in the vehicle-mounted camera 10 according to this embodiment shown in Fig. 1, the position of the imaging device 14 is shifted in the z-axis positive direction from the central portion of the mounting surface 13a of the substrate 13. As a result, in the vehicle-mounted camera 10, the second position D2 is shifted in the z-axis positive direction with respect to the first position D1. Thus, in the vehicle-mounted camera 10, the imaging field of view Q is asymmetrical with respect to the optical axis P.

Specifically, in the vehicle-mounted camera 10, the imaging field of view Q is inclined in the z-axis negative direction with respect to the optical axis P. Thus, in the vehicle-mounted camera 10, only the light ray R1 having the smallest inclination with respect to the optical axis P on the z-axis positive direction side enters the imaging surface 14a, whereas the light rays including the light ray R3 having the largest inclination with respect to the optical axis P on the z-axis negative direction side enter the imaging surface 14a.

That is, in the vehicle-mounted camera 10 according to this embodiment, by biasing the imaging field of view Q in the z-axis negative direction, it is possible to capture an image in a direction largely inclined in the z-axis negative direction with respect to the optical axis P. In such a manner, in the vehicle-mounted camera 10, it is possible to extend the imaging field of view Q in the z-axis negative direction without increasing the size of the imaging device 14.

In the vehicle-mounted camera 10, an image entering the imaging surface 14a becomes smaller for a farther region in the imaging field of view Q, and thus high resolution is required. On the other hand, in the vehicle-mounted camera 10, a sufficiently large image enters the imaging surface 14a for a near region in the imaging field of view Q, and thus high resolution is not required.

From the viewpoint of the modulation transfer function (MTF), higher resolution is obtained in an imaging region closer to the first position D1, through which the optical axis P passes, on the imaging surface 14a of the imaging device 14. For this reason, in the vehicle-mounted camera 10, an imaging region close to the first position D1 on the imaging surface 14a is allocated for a region of the imaging field of view Q, in which information on the far side is required.

Further, in the vehicle-mounted camera 10, the configuration obtained by inclining the imaging field of view Q in the z-axis negative direction as described above makes it possible to capture images of the range including a region located in a direction greatly different from the region to which the optical axis P is directed. In other words, the vehicle-mounted camera 10 according to this embodiment is capable of obtaining high resolution on the far side and capable of satisfactorily generating an image of a wide imaging field of view Q from the far side to the near side.

### (System Configuration Example)

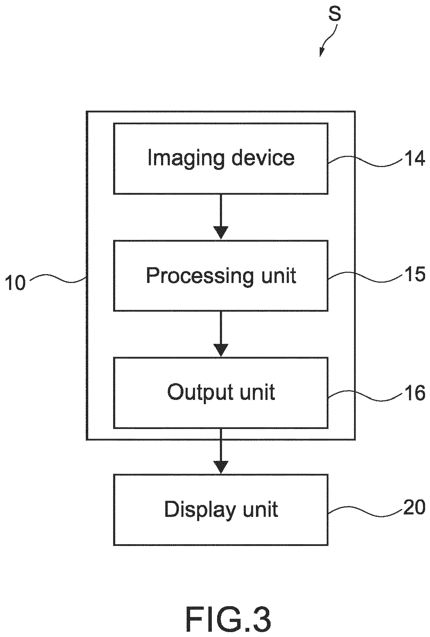

Fig. 3 is a block diagram showing an example of a system configuration using the vehicle-mounted camera 10 according to this embodiment. A vehicle-mounted camera system S includes the vehicle-mounted camera 10 and a display unit 20. Further, the vehicle-mounted camera 10 includes a processing unit 15 and an output unit 16 in addition to the imaging device 14. The processing unit 15 and the output unit 16 are, for example, mounted on the surface opposite to the mounting surface 13a of the substrate 13 (rear surface).

The processing unit 15 executes image processing of the image generated by the imaging device 14. Specifically, the image processing executed by the processing unit 15 includes a distortion correction, an object detection, and the like. The output unit 16 outputs the image subjected to the image processing by the processing unit 15 to the display unit 20. The display unit 20 is configured as a general monitor, and displays the image output from the output unit 16.

### [Rear View Camera]

### (Imaging Request Field of View F1, F2 of Rear View Camera)

The vehicle-mounted camera 10 according to this embodiment is usable as a rear view camera for generating an image with which the rear side of an automobile M can be visually recognized. Hereinafter, an example of using the vehicle-mounted camera 10 as a rear view camera will be described. First, before getting to the main point, first and second imaging request fields of view F1 and F2 of the rear view camera will be described.

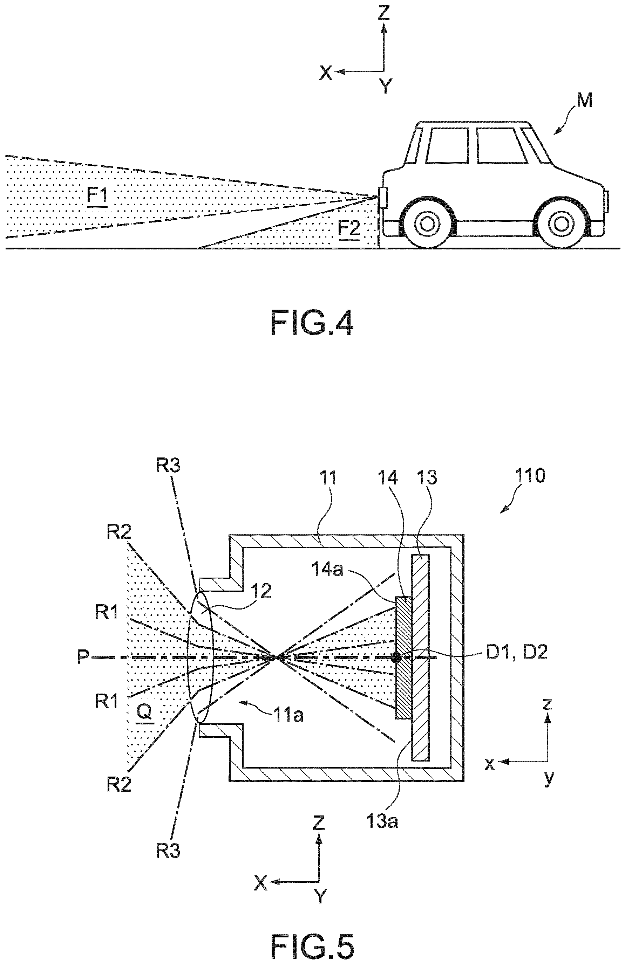

Fig. 4 is a diagram showing the first and second imaging request fields of view F1 and F2 of the rear view camera of the automobile M. Fig. 4 shows mutually orthogonal X-, Y-, and Z-axes. The X-, Y-, and Z-axes define a real space coordinate system fixed in a real space. The X-axis extends forward and backward in the horizontal direction, the Y-axis extends laterally in the horizontal direction, and the Z-axis extends up and down in the vertical direction.

The vehicle-mounted camera 10 is installed at the rear portion of the automobile M in the X-axis direction and is turned rearward in the X-axis direction. The imaging request field of view F1, F2 is a field of view in which generation of an image by the rear view camera is required. The imaging request field of view F1 is horizontally turned rearward in the X-axis direction. The imaging request field of view F2 is inclined downward in the Z-axis direction toward the rear side in the X-axis direction.

The imaging request field of view F1 is necessary for generating a mirror image that can be used as a substitute for a rearview mirror. Therefore, the imaging request field of view F1 corresponds to a field of view that can be visually recognized by a normal rearview mirror. High resolution is required for the imaging request field of view F1 in order to clearly image a far-side region whose image to be incident on the imaging surface 14a becomes small.

The imaging request field of view F2 is necessary for generating a near-side image that can be used for parking assistance. That is, in the near-side image of the imaging request field of view F2, white lines, curbs, and the like in a parking area need to be visually recognized. Thus, the imaging request field of view F2 extends to a region proximate to the automobile M, typically to a region just below, in the Z-axis direction, the rear portion of the automobile M in the X-axis direction.

### (General Vehicle-Mounted Camera 110)

Fig. 5 is a cross-sectional view of the general vehicle-mounted camera 110 shown in Fig. 2, showing a state of being installed in the automobile M while giving priority to the imaging request field of view F1. In the vehicle-mounted camera 110 shown in Fig. 5, the optical axis P is parallel to the X-axis. Therefore, the vehicle-mounted camera 110 shown in Fig. 5 is capable of generating a high-resolution mirror image in the imaging region close to the position D1 on the imaging surface 14a.

On the other hand, in the vehicle-mounted camera 110 shown in Fig. 5, although a part of the imaging request field of view F2 can be imaged, a region close to the automobile M in the imaging request field of view F2 is out of the imaging field of view Q. Therefore, the vehicle-mounted camera 110 shown in Fig. 5 fails to generate a near-side image required for implementing a parking assistance function.

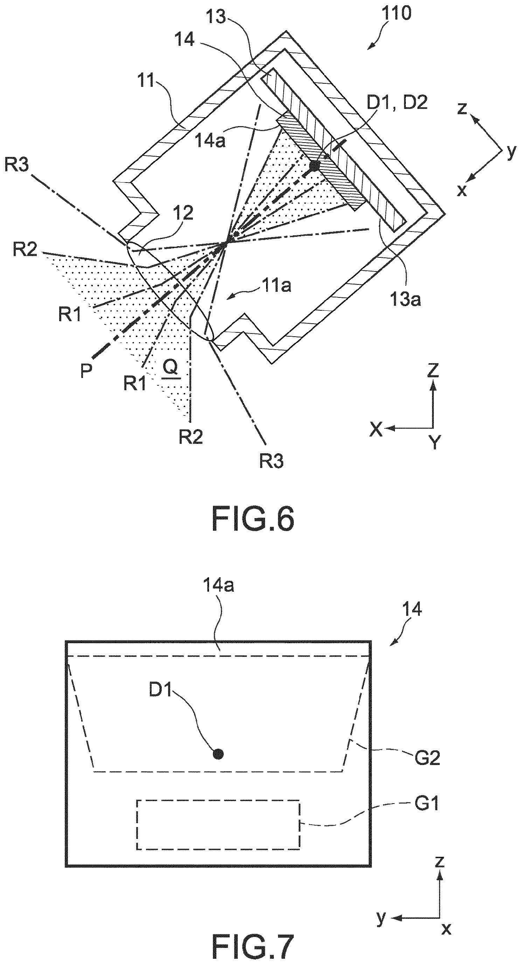

Fig. 6 is a cross-sectional view of the general vehicle-mounted camera 110 shown in Fig. 2, showing a state of being installed in the automobile M while giving priority to the imaging request field of view F2. In the vehicle-mounted camera 110 shown in Fig. 6, the optical axis P is inclined in the Z-axis direction downward. Therefore, the vehicle-mounted camera 110 shown in Fig. 6 can capture an image of the range including a region close to the automobile M in the imaging request field of view F2.

Fig. 7 is a plan view of the imaging surface 14a of the vehicle-mounted camera 110 shown in Fig. 6. Fig. 7 shows, by broken lines, a first imaging region G1 on which light is incident from the imaging request field of view F1, and a second imaging region G2 on which light is incident from the imaging request field of view F2. In the vehicle-mounted camera 110 shown in Fig. 6, the first position D1 through which the optical axis P passes on the imaging surface 14a is in the imaging region G2.

That is, in the vehicle-mounted camera 110 shown in Fig. 6, the imaging region G1 on which light is incident from the imaging request field of view F1 is at a position away from the first position D1. Therefore, the vehicle-mounted camera 110 shown in Fig. 6 fails to generate a high-resolution mirror image, which can be used as a substitute for the rearview mirror in the imaging area G1.

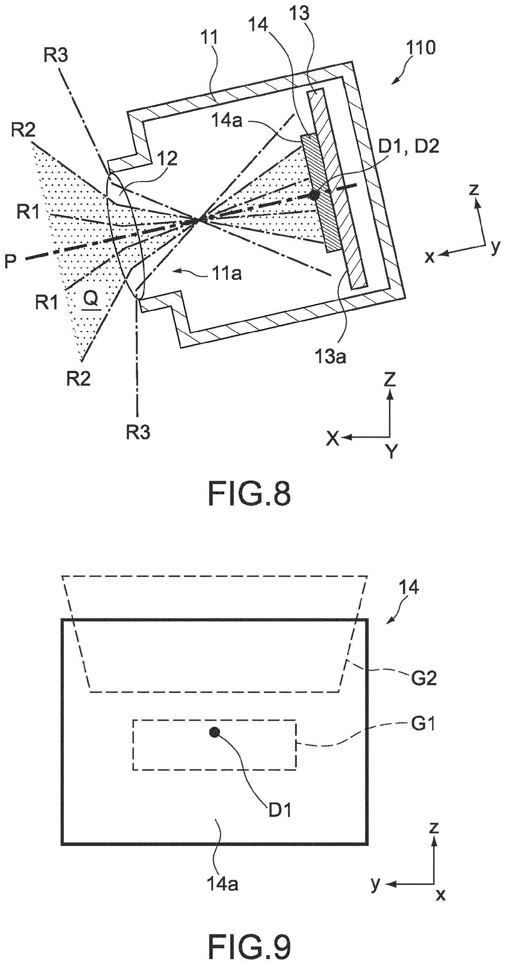

Fig. 8 is a cross-sectional view of the general vehicle-mounted camera 110 shown in Fig. 2, showing a state of being installed in the automobile M with the inclination of the optical axis P being suppressed to be small as compared to Fig. 6. That is, the direction of the optical axis P in the vehicle-mounted camera 110 shown in Fig. 8 is intermediate between the direction of the optical axis P in the vehicle-mounted camera 110 shown in Fig. 5 and the direction of the optical axis P in the vehicle-mounted camera 110 shown in Fig. 6.

Fig. 9 is a plan view of the imaging surface 14a of the vehicle-mounted camera 110 shown in Fig. 8. In the vehicle-mounted camera 110 shown in Fig. 8, the first position D1 through which the optical axis P passes on the imaging surface 14a is in the imaging region G1. Therefore, the vehicle-mounted camera 110 is capable of generating a high-resolution mirror image in the imaging region G1 including the first position D1.

However, in the vehicle-mounted camera 110 shown in Fig. 8, the imaging region G2 does not fall within the imaging surface 14a as shown in Fig. 7, that is, a region close to the automobile M in the imaging request field of view F2 is out of the imaging field of view Q. Therefore, the vehicle-mounted camera 110 shown in Fig. 8 fails to generate a near-side image required for implementing the parking assistance function.

### (Vehicle-Mounted Camera 10 According to Embodiment)

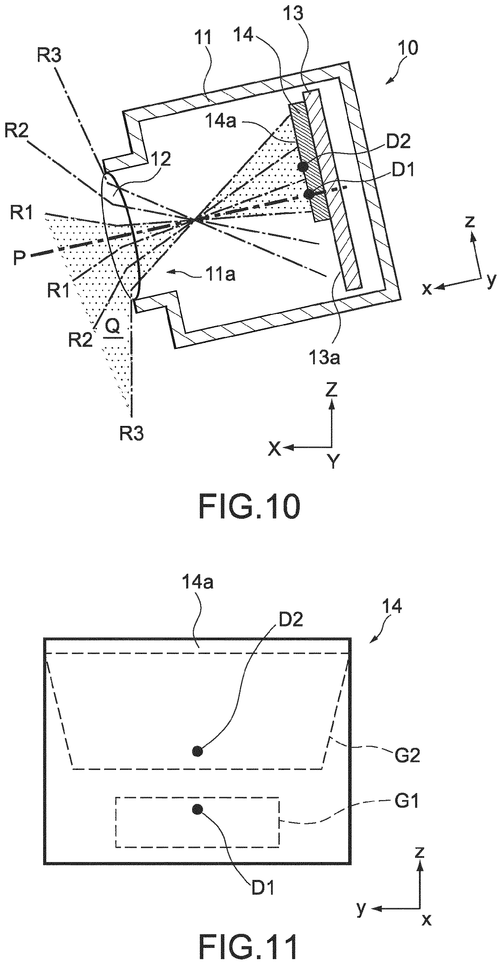

Fig. 10 is a cross-sectional view of the vehicle-mounted camera 10 according to this embodiment shown in Fig. 1, showing a state of being installed in the automobile M. The vehicle-mounted camera 10 shown in Fig. 10 is installed in a state where the first position D1 on the imaging surface 14a is lower than the second position D2 in the Z-axis direction, and the optical axis P is slightly inclined downward in the Z-axis direction to the same extent as the vehicle-mounted camera 110 shown in Fig. 8.

Fig. 11 is a plan view of the imaging surface 14a of the vehicle-mounted camera 10 shown in Fig. 10. In the vehicle-mounted camera 10 shown in Fig. 10, the first position D1 through which the optical axis P passes on the imaging surface 14a is in the imaging region G1. Therefore, the vehicle-mounted camera 10 is capable of generating a high-resolution mirror image in the imaging region G1 including the first position D1.

Further, in the vehicle-mounted camera 10 shown in Fig. 10, the imaging request field of view F2 is included in the imaging field of view Q of the vehicle-mounted camera 10, that is, as shown in Fig. 11, the entire imaging region G2 falls within the imaging surface 14a. Therefore, the vehicle-mounted camera 10 shown in Fig. 10 is capable of generating a near-side image required for implementing the parking assistance function.

As described above, the vehicle-mounted camera 10 according to this embodiment is capable of collectively generating a high-resolution mirror image as a substitute for a rearview mirror and a near-side image with which the range including a region close to the automobile M can be visually recognized for parking assistance, in the single imaging field of view Q. In other words, a function of substituting for a rearview mirror and a parking assistance function can be implemented by the single vehicle-mounted camera 10.

### (System Configuration Example)

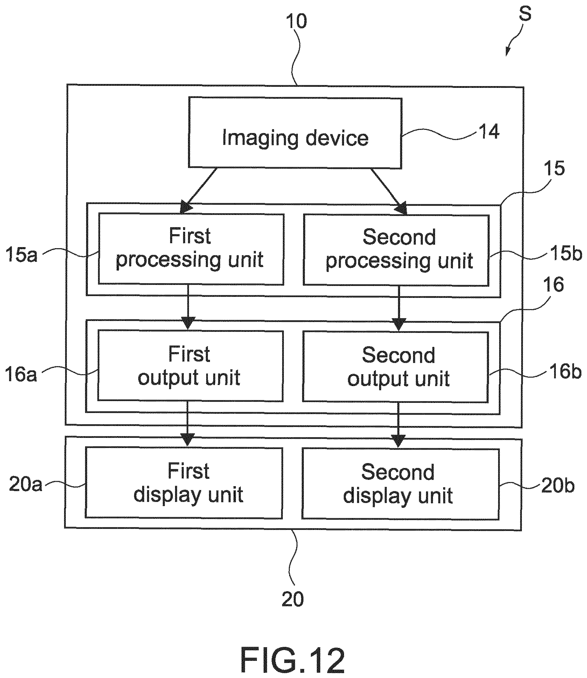

Fig. 12 is a block diagram showing an example of a system configuration using the vehicle-mounted camera 10 according to this embodiment as a rear view camera. In the vehicle-mounted camera system S, the processing unit 15 includes first and second processing units 15a and 15b, the output unit 16 includes first and second output units 16a and 16b, and the display unit 20 includes first and second display units 20a and 20b.

The first processing unit 15a, the first output unit 16a, and the first display unit 20a are used for implementing the function of substituting for a rearview mirror. That is, a mirror image generated in the imaging region G1 of the imaging surface 14a of the imaging device 14 is image-processed by the first processing unit 15a, output by the first output unit 16a, and displayed by the first display unit 20a.

Further, the second processing unit 15b, the second output unit 16b, and the second display unit 20b are used for implementing the parking assistance function. That is, a near-side image generated in the imaging region G2 of the imaging surface 14a of the imaging device 14 is image-processed by the second processing unit 15b, output by the second output unit 16b, and displayed by the second display unit 20b.

Note that, in the vehicle-mounted camera 10, the function of the first and second processing units 15a and 15b may be implemented by a single processing unit 15, and the function of the first and second output units 16a and 16b may be implemented by a single output unit 16. Further, the vehicle-mounted camera system S may display the mirror image and the near-side image by a single display unit 20.

### [Side View Camera]

The vehicle-mounted camera 10 according to this embodiment is usable as a side view camera for generating an image usable as a substitute for a side mirror for the purpose of visual recognition from the rear side toward the lateral side. Hereinafter, an example of using the vehicle-mounted camera 10 as a side view camera will be described. First, before getting to the main point, an imaging request field of view F of a side view camera will be described.

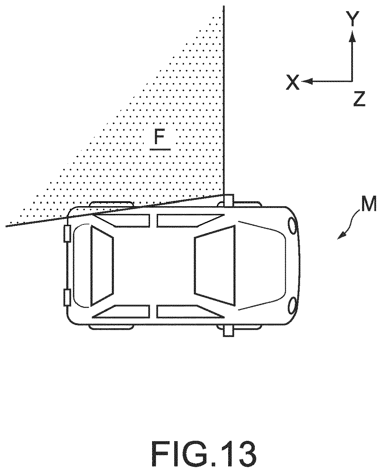

Fig. 13 is a diagram showing the imaging request field of view F of the side view camera. The vehicle-mounted camera 10 is installed at a lateral portion of the automobile M in the Y-axis direction and is turned rearward in the X-axis direction. The imaging request field of view F is a field of view in which the generation of an image by the side view camera is required. The imaging request field of view F corresponds to a field of view that can be visually recognized by a normal side mirror.

Therefore, the imaging request field of view F extends from the rear side in the X-axis direction to the lateral side in the Y-axis direction. In a region rearward in the X-axis direction in the imaging request field of view F, high resolution is required in order to clearly image a far-side region whose image to be incident on the imaging surface 14a becomes small. Further, the imaging request field of view F extends to a region on the lateral side in the Y-axis direction in order to be able to visually recognize the surroundings in a wide range.

Note that Fig. 13 shows only the imaging request field of view F on the left side of the automobile M in the Y-axis direction, but the imaging request field of view F is similarly present on the right side of the automobile M in the Y-axis direction. In the following description, an example of installing the vehicle-mounted camera 10 on the left side of the automobile M in the Y-axis direction will be described, but it is possible to install the vehicle-mounted camera 10 in the same manner on the right side of the automobile M in the Y-axis direction.

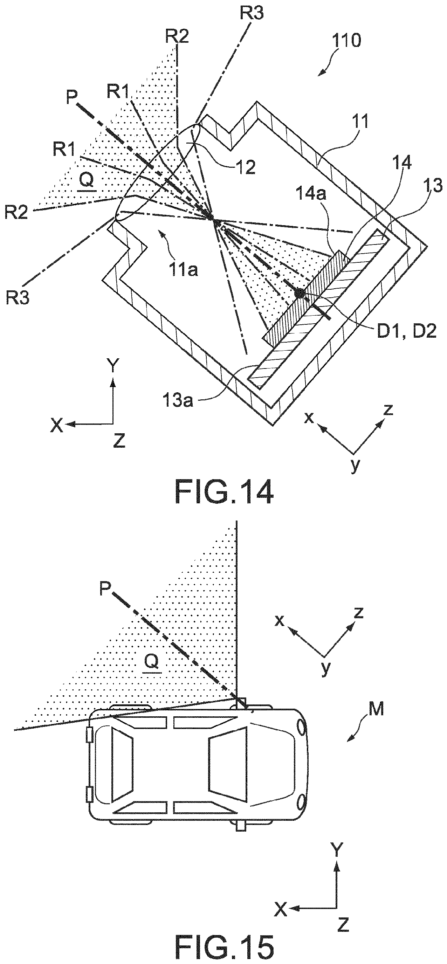

Fig. 14 is a cross-sectional view of the general vehicle-mounted camera 110 shown in Fig. 2, showing a state of being installed in the automobile M. In the vehicle-mounted camera 110 shown in Fig. 14, the optical axis P is inclined outward in the Y-axis direction toward the rear side in the X-axis direction. Thus, in the vehicle-mounted camera 110, the imaging field of view Q from the rear side in the X-axis direction toward the lateral side in the Y-axis direction is obtained.

Fig. 15 is a diagram showing the imaging field of view Q and the optical axis P in the vehicle-mounted camera 110 shown in Fig. 14. The vehicle-mounted camera 110 shown in Fig. 14 is installed so as to match the imaging field of view Q with the imaging request field of view F shown in Fig. 13. Therefore, in the vehicle-mounted camera 110 shown in Fig. 14, the imaging request field of view F is included in the imaging field of view Q.

However, in the vehicle-mounted camera 110 shown in Fig. 14, since the optical axis P is greatly inclined outward in the Y-axis direction, the light incident on the lens unit 12 from the rear side in the X-axis direction is incident on a position distant from the first position D1 through which the optical axis P passes on the imaging surface 14a. Therefore, the vehicle-mounted camera 110 shown in Fig. 14 fails to generate a high-resolution image of a region on the rear side in the X-axis direction.

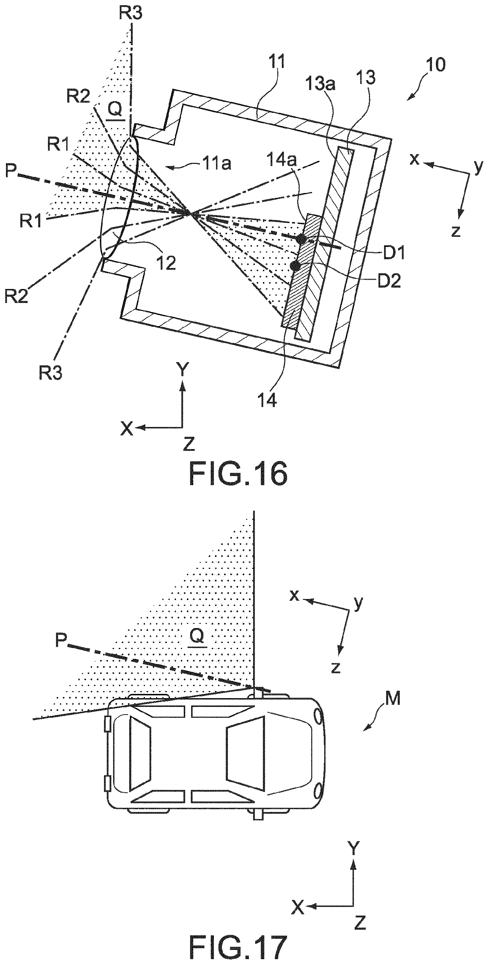

Fig. 16 is a cross-sectional view of the vehicle-mounted camera 10 according to this embodiment shown in Fig. 1, showing a state of being installed in the automobile M. The vehicle-mounted camera 10 shown in Fig. 16 is installed in a state where the first position D1 on the imaging surface 14a is outside of the second position D2 in the Y-axis direction, and the optical axis P is slightly inclined outward in the Y-axis direction toward the rear side in the X-axis direction.

Fig. 17 is a diagram showing the imaging field of view Q and the optical axis P in the vehicle-mounted camera 10 shown in Fig. 16. Also in the vehicle-mounted camera 10 shown in Fig. 16, similarly to the vehicle-mounted camera 110 shown in Fig. 14, the imaging request field of view F is included in the imaging field of view Q. On the other hand, in the vehicle-mounted camera 10 shown in Fig. 16, the optical axis P is turned rearward in the X-axis direction relative to the vehicle-mounted camera 110 shown in Fig. 14.

Thus, the vehicle-mounted camera 10 shown in Fig. 16 is capable of imaging a region on the rear side in the X-axis direction in an imaging region closer to the first position D1 of the imaging surface 14a. Therefore, the vehicle-mounted camera 10 shown in Fig. 16 is capable of obtaining high resolution for the rear side in the X-axis direction and is capable of generating an image of a wide imaging field of view Q from the rear side in the X-axis direction to the lateral side in the Y-axis direction.

### [Another Configuration Example of Vehicle-Mounted Camera 10]

The vehicle-mounted camera 10 is applicable not only to the automobile M but also to various movable bodies. Examples of the movable body to which the vehicle-mounted camera 10 is applicable include an automobile, an electric vehicle, a hybrid electric vehicle, a motorcycle, a bicycle, personal mobility, an airplane, a drone, a ship, a robot, construction machinery, and agricultural machinery (a tractor).

### [Other Embodiments]

The embodiment of the present technology has been described above. However, of course the present technology is not limited to the embodiment described above, and various modifications may be made thereto without departing from the scope of the present technology.

Note that the present technology may also take the following configurations.
(1) A vehicle-mounted camera, including:
   a lens unit; and
   an imaging device having a rectangular imaging surface that extends along an in-plane direction orthogonal to an optical axis of the lens unit and includes a first position and a second position different from each other, the optical axis passing through the first position, the second position being at the center in the in-plane direction.
(2) The vehicle-mounted camera according to (1), which is installed at a rear portion of a movable body and is turned rearward.
(3) The vehicle-mounted camera according to (2), which is installed such that the first position is vertically lower than the second position.
(4) The vehicle-mounted camera according to (3), which is installed such that the optical axis is inclined vertically downward toward a rear side.
(5) The vehicle-mounted camera according to (3) or (4), in which
   the imaging surface includes
      a first imaging region for generating a mirror image for substituting for a rearview mirror, and
      a second imaging region for generating a near-side image for parking assistance, and
   the first position is in the first imaging region.
(6) The vehicle-mounted camera according to (1), which is installed at a lateral portion of a movable body and is turned rearward.
(7) The vehicle-mounted camera according to (6), which is installed such that the first position is outside of the second position.
(8) The vehicle-mounted camera according to (7), which is installed such that the optical axis is inclined outward toward a rear side.
(9) The vehicle-mounted camera according to any one of (6) to (8), which is installed such that an image for substituting for a side mirror can be generated. Reference Signs List

- 10: vehicle-mounted camera
- 11: housing
- 11a: opening
- 12: lens unit
- 13: substrate
- 13a: mounting surface
- 14: imaging device
- 14a: imaging surface
- P: optical axis
- Q: imaging field of view
- G1, G2: first and second imaging regions
- D1, D2: first and second positions

## Claims

1. A vehicle-mounted camera, comprising:
a lens unit; and
an imaging device having a rectangular imaging surface that extends along an in-plane direction orthogonal to an optical axis of the lens unit and includes a first position and a second position different from each other, the optical axis passing through the first position, the second position being at the center in the in-plane direction.

2. The vehicle-mounted camera according to claim 1, which is installed at a rear portion of a movable body and is turned rearward.

3. The vehicle-mounted camera according to claim 2, which is installed such that the first position is vertically lower than the second position.

4. The vehicle-mounted camera according to claim 3, which is installed such that the optical axis is inclined vertically downward toward a rear side.

5. The vehicle-mounted camera according to claim 3, wherein
the imaging surface includes
a first imaging region for generating a mirror image for substituting for a rearview mirror, and
a second imaging region for generating a near-side image for parking assistance, and
the first position is in the first imaging region.

6. The vehicle-mounted camera according to claim 1, which is installed at a lateral portion of a movable body and is turned rearward.

7. The vehicle-mounted camera according to claim 6, which is installed such that the first position is outside of the second position.

8. The vehicle-mounted camera according to claim 7, which is installed such that the optical axis is inclined outward toward a rear side.

9. The vehicle-mounted camera according to claim 6, which is installed such that an image for substituting for a side mirror can be generated.
